# EUROPEAN PATENT APPLICATION

(11) **EP 2 589 914 A1**
(43) Date of publication of application: **08.05.2013**
(21) Application number: 11187434.3
(22) Date of filing: 02.11.2011
(51) Int. Cl.: F28D 19/04, F23L 15/02

(54) **Rotary regenerative heat exchanger**

(71) Applicant: Alstom Technology Ltd, 5400 Baden (CH)
(72) Inventor: Stallmann, Olaf, 55270 Essenheim (DE); Heinz, Gerhard, 73732 Esslingen (DE)
(74) Representative: Bratt, Hanna Catharina

(57) **Abstract**

A rotary, regenerative heat exchanger (100) arranged for transferring heat between a first gas flow (106) and a second gas flow (110) is fitted with a cover portion covering at least one of the radial compartments of the heat exchanger at a time. The cover portion comprises suction connections (126) through which suction is applied to the covered compartment. In this way gas mixing between a first gas and a second gas is reduced.

## Description

### Technical field

The present invention relates to a rotary, regenerative heat exchanger, a combustion system, and a method of reducing gas mixing between a first gas flow and a second gas flow passing through a rotary regenerative heat exchanger.

### Background

There is growing concern that emission of carbon dioxide and other greenhouse gases to the atmosphere is resulting in climate change and other as yet unknown consequences. As existing fossil fuel fired power plants are among the largest sources of carbon dioxide emissions, capture of the carbon dioxide in flue gases from these plants has been identified as an important means for reducing atmospheric carbon dioxide emissions. To that end, oxygen firing is a promising boiler technology being developed to capture carbon dioxide from flue gases of both existing and new power plants.

In an oxygen fired power plant, a fossil fuel (such as coal, for example) is burned in a combustion process in a combustion system of the power plant in a similar manner as in a conventional, e.g., air fired, power plant. In the oxygen fired power plant, however, oxygen and recirculated flue gas, the so called oxidant are used instead of air as an oxidizer in the combustion process. The recirculated flue gas contains primarily carbon dioxide gas; as a result, the furnace generates a carbon dioxide rich flue gas stream. The carbon dioxide rich flue gas is processed by a gas processing system, which captures the carbon dioxide from the flue gas prior to exhausting the flue gas to the atmosphere via a stack. In a typical oxygen-fired power plant, carbon dioxide levels in the flue gas leaving the furnace are reduced by more than 90% (percent-by-volume), as compared to flue gas leaving a power plant without a gas processing system, before reaching the stack.

Air and oxidant leakage contributes to an increase in oxygen and nitrogen concentrations, plus other impurities in the flue gas. One way that oxidant leaks into the flue gas is in regenerative heat exchanger, specifically regenerative oxidant heaters, for example. More particularly, high pressure oxidant on an oxidant side of the regenerative oxidant heater leaks over to a relatively lower pressure flue gas side, thereby increasing the concentrations of its constituents in the flue gas. Oxidant leakage, or for conventional power plant air leakage into the flue gas can be significant. For example, air leakage into a typical pulverized coal boiler may be as high as approximately 5% of the total combustion air, and older boilers may have even more air leakage.

Moreover, in a power plant equipped with a post combustion carbon dioxide capture system, leakage reduction is even more beneficial. For example, when designing the post combustion carbon dioxide capture system, air leakage needs to be taken into account, and oversizing equipment of the carbon dioxide capture system is expensive. Air leakage into the flue gas increases the concentration of free oxygen in the flue gas, and therefore, adversely affects oxygen-sensitive carbon dioxide capture chemicals, thereby increasing chemical costs in the power plant having the carbon dioxide capture system.

WO 10/132143 discloses a regenerative air or oxidant preheater for a power plant where air leakage between an inlet and an outlet plenum is reduced by introducing a third gas flow in a radial plenum and an axial plenum which are arranged between the inlet plenum and the outlet plenum.

### Summary

According to aspects illustrated herein there is provided a rotary, regenerative heat exchanger for transferring heat between a first gas flow and a second gas flow by which gas mixing between the first and the second gas flow is reduced.

According to one aspect illustrated herein, there is provided a rotary, regenerative heat exchanger for transferring heat between a first gas flow and a second gas flow, the heat exchanger comprising a housing having a first flow passage for the first gas flow, and a second flow passage for the second gas flow, a rotor rotatably mounted within the housing, the rotor having radially extending partitions dividing the rotor into radial compartments, wherein a cover portion is arranged in the housing and separating the first flow passage from the second flow passage, the cover portion covering at least one radial compartment of the rotor at a time, and having suction connections adapted for applying suction to the at least one radial compartment covered by the cover portion, to reduce mixing between the first gas flow and the second gas flow.

According to other aspects illustrated herein a combustion system is provided which comprises a boiler combusting fuel in the presence of an oxygen-containing gas and producing carbon dioxide rich flue gas, and a rotary regenerative heat exchanger according to the above, arranged to transfer heat from a flow of carbon dioxide rich flue gas to a flow of oxygen enriched, recirculated carbon dioxide rich flue gas used as combustion gas in the boiler, and to reduce mixing between the flow of carbon dioxide rich flue gas and the flow of oxygen enriched, recirculated carbon dioxide rich flue gas.

According to other aspects illustrated herein a method is provided of reducing gas mixing between a first gas flow and a second gas flow passing through a rotary regenerative heat exchanger having a housing with a first flow passage for the first gas flow, and a second flow passage for the second gas flow, and a rotor rotatably mounted within the housing, the rotor having radially extending partitions dividing the rotor into radial compartments, the method comprising the steps of
heat exchanging the first gas flow with the second gas flow by passing the first gas flow through the first passage and the second gas flow through the second passage while rotating the rotor, and
applying suction through suction connections arranged in a cover portion separating the first flow passage and the second flow passage and covering at least one radial compartment at a time, to reduce mixing between the first and the second gas flow.

The above described and other features are exemplified by the following figures and detailed description.

### Brief description of the drawings

Referring now to the figures, which are exemplary embodiments, and wherein the like elements are numbered alike:
Fig. 1 shows a rotary, regenerative heat exchanger in a perspective view.
Fig. 2 illustrates the rotary, regenerative heat exchanger in a partially sectional view.
Figs 3a and 3b illustrates the rotary, regenerative heat exchanger in a perspective view with a related pressure profile.
Fig. 4 shows a combustion system comprising the heat exchanger of Fig. 1-3.
Fig. 5 illustrates a method of reducing gas mixing.

### Detailed description of preferred embodiments

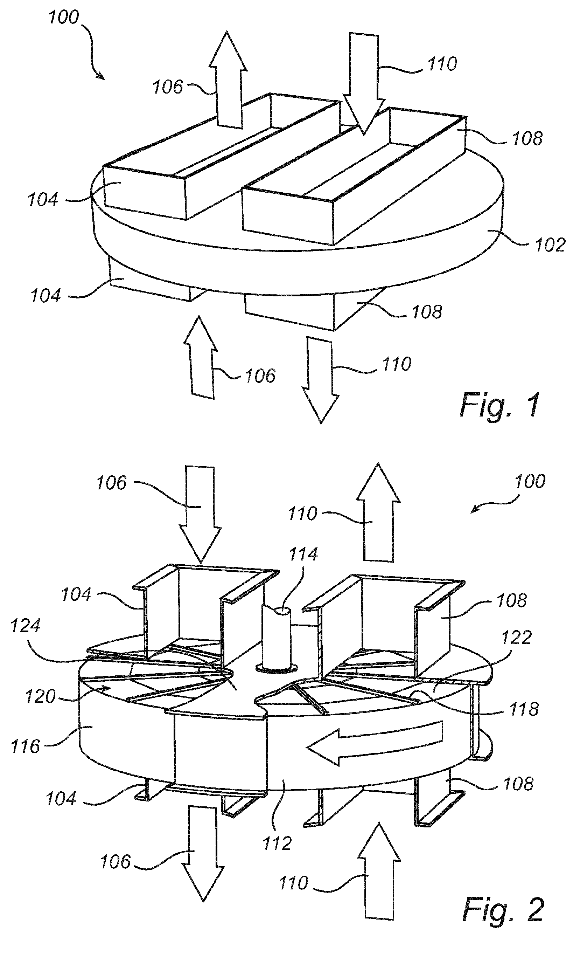

A rotary, regenerative heat exchanger 100 is shown in Fig. 1. The heat exchanger has a housing 102 with a first flow passage 104 for a first gas flow 106 and a second flow passage 108 for a second gas flow 110. One of the gas flow has a higher temperature than the other, and in operation the rotary heat exchanger transfers heat from the warmer gas flow to colder, and vice versa.

As shown in Fig. 2, the heat exchanger further has a rotor 112 which is rotatably mounted in the housing 102 on a rotation axle 114 to rotate in a direction 116 on the rotation axle 114. The rotor 112 is divided by a number of radially extending partitions 118 into a number of radial compartments 120. In the compartments 120 heat exchanging elements 122 are arranged. The heat exchanging elements are made of a material suitable for heat exchanging between the two gas flows 106 and 110 as the rotor 112 rotates to accomplish that compartments 120 subjected to one gas flow is rotated to be subjected to the other gas flow, thereby transferring heat from one gas flow to the other. It may be noted that it might also be possible to let the compartments 120 themselves constitutes the heat exchange elements, such as by arranging them very closely together.

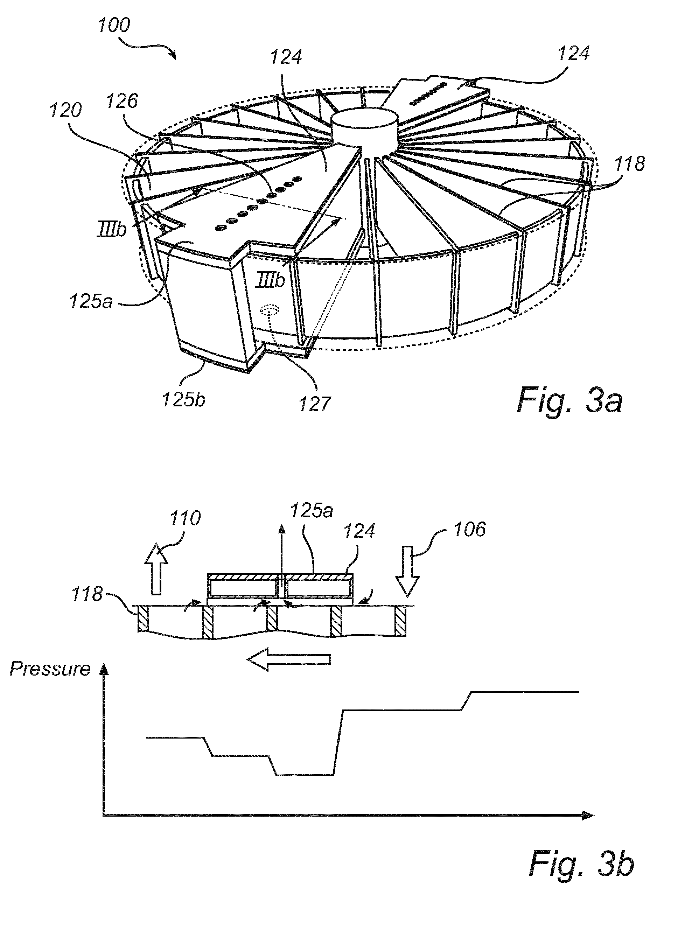

A cover portion 124 which separates the first flow passage 104 and the second flow passage 108 from each other is arranged in the housing 102 and is shown schematically in Fig. 2 and in more detail in Fig. 3a. The cover portion 124 has suction connections 126 which apply suction to the compartment or compartments 120 which presently are covered by the cover portion 124. The cover portion may comprise a first sector shaped plate 125a and a second sector shaped plate 125b arranged on opposite sides of the radial compartment presently covered by the cover portion 124. The suction connection may be provided in one of or both the sector shaped plates 125a, 125b.

The suction connection 126 may e.g. be in the form of a number of smaller connections or in the form of a slit, and they may centrally disposed in the cover plate or plates 125a, 125b, the latter improving the functioning of the suction connections 126 by ascertaining that the compartment 120 covered by the cover portion 124 is not in fluid connection with the suction connections 126 until that entire compartment 120 is covered by the cover portion 124, and further the fluid connection between the suction connections 126 is broken before the compartment 120 is rotated to a position where it is no longer covered by the cover portion 124. This in turn means that there is a reduced amount of gas leaking from the first or the second gas flow passages 104, 108 to the suction connections 126.

The cover portion 124 in some instances covers at least two compartments 120, and will cover at least one compartment 120 at a time. By applying suction to the compartment 120 covered by the cover portion 124 a pressure is provided in the compartment 120 covered by the cover portion 124 which is lower than the pressure in the first flow passage 106 and the second flow passage 110, and any remaining gas from the first flow passage 106 will thus be removed from the compartment 120 before that compartment 120 is rotated to the second flow passage 108, and vice versa. In this manner the leakage between the first and the second gas flow 106, 110 may be reduced. In Fig. 3b a pressure profile of the compartments is also illustrated, from which it is clear that gas is sucked out of the radial compartment 120 presently covered by the cover portion 124.

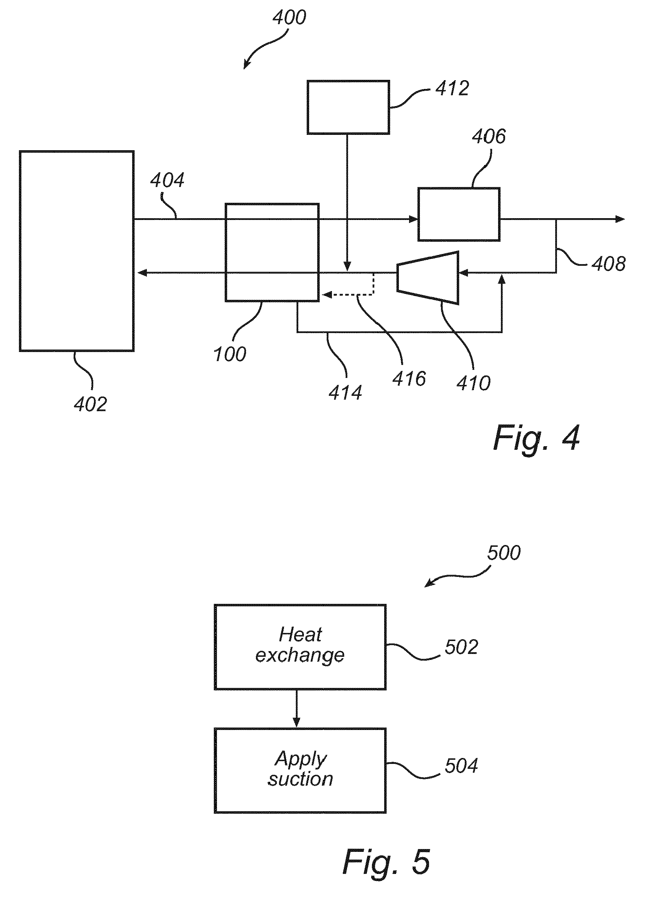

As a further option, a flushing gas may be fed to the compartment covered by the cover portion through supply connections 127, which may be arranged in the second cover plate 125b. In this case the suction connections 126 would be arranged in the first cover plate 125a only. The flushing gas may be recirculated, non-oxygen enriched flue gas from a boiler 402 in a combustion system 400, as shown in Fig. 4.

Fig. 4 schematically shows a combustion system 400 which includes the rotary, regenerative heat exchanger 100 shown in Figs 1-3. The combustion system 400 comprises a boiler 402 which combusts fuel, such as coal or oil, in the presence of an oxygen-containing gas and produces hot carbon dioxide rich flue gas. The hot carbon dioxide rich flue gas stream is fed from the boiler 402 through a duct 404, passing the rotary, regenerative heat exchanger 100 through the first flow passage 104 as the first gas stream 106. The stream of flue gas then passes or is treated in a number of conventional parts of a combustion system such as an electrostatic precipitator, ESP, possible further heat exchangers, turbines etc, all being symbolized by the device 406. At least part of the flue gas stream is then recirculated or fed back to the boiler 402 as combustion gas via the duct 408, through a compressor, or fan, 410. The recirculated stream of flue gas is enriched with oxygen from an oxygen source 412 and then passes the rotary, regenerative heat exchanger 100 through the second flow passage 108, as the second gas flow 110, there being heated by the first gas flow 106, i.e. the hot flue gas from the boiler 402.

To reduce the gas mixing in the rotary, regenerative heat exchanger 100, between the hot flue gas from the boiler 402 and the recirculated, oxygen enriched flue gas, suction is applied to at least one compartment 120 of the rotor 112, through the suction connections 126 in the cover portion 124.

The suction may be provided, as shown in Fig. 4, by providing a duct 414 connecting the suction connections to the duct 408, upstream of the compressor 410. The compressor 410 is then utilized both for compressing and feeding the recirculated flue gas to the boiler and for providing suction to the radial compartment covered by the cover portion, and no extra equipment needs to be installed for the latter purpose. As an alternative, it would also be possible to install a separate device specifically designed for providing suction to the suctions connections 124.

The gas which is removed from the radial compartment covered by the cover portion 124 may, as shown in Fig. 4, be fed to the duct for feeding recirculated flue gas to the boiler, prior to the flue gas being oxygen enriched. This provides a convenient way of removing the gases without having to install any separate equipment. The removed gas could also be fed to other location, such as for use in another combustion system or possibly to a gas cleaning equipment.

As previously mentioned, as a further option, a flushing gas could be supplied to the radial compartment 120 presently covered by the cover portion through supply connections 127 for even further reducing the gas mixing between the first and the second gas flow. The supply connections 127 may be fed with flushing gas in the form of non-oxygen enriched, recirculated flue gas through a duct 416 which is connected to the duct for feeding recirculated flue gas to the boiler, prior to the oxygen enrichment. The feeding of flushing gas into the radial compartment covered by the cover portion even further reduces the risk of gas mixing between the hot flue gas and the oxygen enriched, recirculated flue gas.

Fig. 5 illustrates a method 500 of reducing gas mixing between a first gas flow and a second gas flow passing through a rotary regenerative heat exchanger 100 having a housing 102 with a first flow passage 104 for the first gas flow 106, and a second flow passage 108 for the second gas flow 110, and a rotor 112 rotatably mounted within the housing 102, the rotor 112 having radially extending partitions 118 dividing the rotor 112 into radial compartments 120.

In a first step 502 the first gas flow 106 is heat exchanged with the second gas flow 110 by passing the first gas flow 106 through the first passage 104 and the second gas flow 110 through the second passage 108 while rotating the rotor 112. In a second step 504 suction is applied through suction connections 126 arranged in a cover portion 124 separating the first flow passage 104 and the second flow passage 108 and covering at least one radial compartment 120 at a time, to reduce mixing between the first and the second gas flow 106, 110.

Herein is discussed a rotary, regenerative heat exchanger for exchanging heat between a first and a second gas flow, i.e. a bi-sector rotary heat exchanger. The principles of the embodiments of the invention may however be applied also in a tri-sector or quad-sector heat exchanger, both of which are well known options for rotary, regenerative heat exchangers. In case a tri-sector or quad-sector heat exchanger is used, the cover portion described herein might be used to separate only some of the flows, where the reduction of gas mixing is most important, and other means may be used to separate such gas flows where more gas mixing is tolerable. A cover portion such as is described herein might also be installed so as to reduce gas mixing between all neighboring gas flows in the heat exchanger.

Disclosed herein is a regenerative heat exchanger for a combustion system, such as a power plant. Such equipment is often referred to as an air preheater, but it would also be suitable for use with an oxidant gas. The power plant may be an oxygen-fired power plant, or an air-fired power plant, a pulverized coal power plant, or a circulating fluidized bed power plant with or without carbon dioxide capture. While the present invention has been described in relation to such a combustion system, the invention also contemplates such a regenerative heat exchanger for other applications.

To summarize, a rotary, regenerative heat exchanger arranged for transferring heat between a first gas flow and a second gas flow is fitted with a cover portion covering at least one of the radial compartments of the heat exchanger at a time. The cover portion comprises suction connections through which suction is applied to the covered compartment. In this way gas mixing between a first gas and a second gas is reduced.

While the invention has been described with reference to a number of preferred embodiments, it will be understood by those skilled in the art that various changes may be made and equivalents may be substituted for elements thereof without departing from the scope of the present invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A rotary, regenerative heat exchanger for transferring heat between a first gas flow (106) and a second gas flow (110), the heat exchanger (100) comprising
a housing (102) having a first flow passage (104) for the first gas flow (106), and a second flow passage (108) for the second gas flow (110),
a rotor (112) rotatably mounted within the housing (102), the rotor (112) having radially extending partitions (118) dividing the rotor (112) into radial compartments (120),
**characterized by**
a cover portion (124) arranged in the housing (102) separating the first flow passage (104) from the second flow passage (108), the cover portion (124) covering at least one radial compartment (120) of the rotor (112) at a time and having suction connections (126) adapted for applying suction to the at least one radial compartment (120) covered by the cover portion (124), to reduce mixing between the first gas flow (106) and the second gas flow (110).

2. The heat exchanger of claim 1, wherein the first gas flow (106) is a stream of carbon dioxide rich flue gases from a boiler (402) in a combustion system (400) and the second gas flow is a stream of oxygen enriched, recirculated flue gas for use as combustion gas in the boiler (402).

3. The heat exchanger of any of the preceding claims, wherein the cover portion (124) comprises supply connections (127) adapted for feeding a flushing gas into the at least one radial compartment (120) covered by the cover portion (124).

4. The heat exchanger of claim 3, wherein the flushing gas is non-oxygen enriched, recirculated flue gas.

5. The heat exchanger of any of the preceding claims, wherein the cover portion (124) comprises a first sector shaped plate (125a) and a second sector shaped plate (125b) arranged on opposite sides of the radial compartment (120) covered by the cover portion (124).

6. The heat exchanger of claim 5, wherein the suction connections (126) are arranged in the first cover plate (125a).

7. The heat exchanger of claim 6, wherein the suction connections (126) are arranged in the first cover plate (125a) and in the second cover plate (125b).

8. The heat exchanger of any of claims 5-7, wherein the suction connections (126) are centrally disposed in the cover plate or plates (125a, 125b).

9. The heat exchanger of any of the preceding claims wherein the cover portion (124) covers at least two radial compartments (120).

10. A combustion system comprising
a boiler (402) combusting fuel in the presence of an oxygen-containing gas and producing carbon dioxide rich flue gas, and
a rotary regenerative heat exchanger (100) according to any of claims 1-9, arranged to transfer heat from a flow of carbon dioxide rich flue gas to a flow of oxygen enriched, recirculated carbon dioxide rich flue gas used as combustion gas in the boiler (402), and to reduce mixing between the flow of carbon dioxide rich flue gas and the flow of oxygen enriched, recirculated carbon dioxide rich flue gas.

11. The combustion system of claim 10, further comprising
a duct (414) connected to the suction connections (126) and arranged for transporting gas from the at least one radial compartment (120) covered by the cover portion (124) to a recirculated flue gas duct (408) for transporting recirculated flue gas to the boiler (402), and
a compressor (410) arranged in the recirculated flue gas duct (410) for compressing recirculated flue gas and for providing suction to the suction connections (126).

12. A method of reducing gas mixing between a first gas flow and a second gas flow passing through a rotary regenerative heat exchanger (100) having a housing (102) with a first flow passage (104) for the first gas flow (106), and a second flow passage (108) for the second gas flow (110), and a rotor (112) rotatably mounted within the housing (102), the rotor (112) having radially extending partitions (118) dividing the rotor (112) into radial compartments (120), comprising the steps of
heat exchanging the first gas flow (106) with the second gas flow (110) by passing the first gas flow (106) through the first passage (104) and the second gas flow (110) through the second passage (108) while rotating the rotor (112),
applying suction through suction connections (126) arranged in a cover portion (124) separating the first flow passage (104) and the second flow passage (108) and covering at least one radial compartment (120) at a time, to reduce mixing between the first and the second gas flow (106, 110).

13. The method of claim 12, wherein the step of applying suction to the at least one radial compartment (120) covered by the cover portion (124) comprises providing a pressure in at least one radial compartment (120) covered by the cover portion (124) lower than the pressure in the first flow passage (104) and the second flow passage (108).

14. The method of claim 12 or 13, wherein the first gas flow is flue gas from a boiler (402) in a combustion system (400) and the second gas flow is oxygen enriched, recirculated flue gas for use as combustion gas in the boiler (402).

15. The method of any of claims 12-14, further comprising feeding flushing gas into the at least one radial compartment (120) covered by the cover portion (124) through supply connections (127) arranged in the cover portion (124).
